# EUROPÄISCHE PATENTSCHRIFT

(11) **EP 2 652 568 B1**
(45) Veröffentlichungstag und Bekanntmachung des Hinweises auf die Patenterteilung: **25.02.2015**
(21) Anmeldenummer: 11802332.4
(22) Anmeldetag: 09.12.2011
(51) Int. Cl.: B25J 9/16, G05B 19/423

(54) **EINRICHTUNG ZUR PROGRAMMIERUNG EINER HANDHABUNGSVORRICHTUNG**
DEVICE AND METHOD FOR PROGRAMMING A HANDLING APPARATUS
SYSTÈME ET PROCÉDÉ DE PROGRAMMATION D'UN DISPOSITIF DE MANIPULATION

(30) Priorität: 16.12.2010 DE 102010063222
(43) Veröffentlichungstag der Anmeldung: 23.10.2013
(73) Patentinhaber: Robert Bosch GmbH, 70442 Stuttgart (DE)
(72) Erfinder: ROETHLING, Frank, 33649 Bielefeld (DE); DOSE, Sven, 76646 Bruchsal (DE); RUEB, Andreas, 71679 Asperg (DE)
(86) Internationale Anmeldenummer: PCT/EP2011/072334
(87) Internationale Veröffentlichungsnummer: WO 2012/080127

(56) Entgegenhaltungen:
- EP-A1- 1 724 676
- WO-A2-2007/099511
- US-B1- 6 212 443

## Beschreibung

### Stand der Technik

Die Erfindung betrifft eine Einrichtung zur Programmierung einer Handhabungsvorrichtung, insbesondere eines Industrieroboters, nach dem Oberbegriff des Anspruchs 1. Ferner betrifft die Erfindung eine Handhabungseinrichtung mit einer erfindungsgemäßen Einrichtung zur Programmierung.

Eine Einrichtung zur Programmierung einer Handhabungseinrichtung nach dem Oberbegriff des Anspruchs 1 ist aus der WO 2007/099511 A2 bekannt. Die dort erwähnten Eingabemittel können an einem Roboterarm angeordnet sein. In der Praxis ist ein manuelles Bewegen eines Roboterarms zum Einlernen des Bewegungswegs des Roboterarms für einen Bediener aufgrund beispielsweise im Bewegungsweg des Bedieners befindlicher, ortsfester Einrichtungen oftmals schwierig bzw. nicht durchführbar. Daher ist die Bedienung der Eingabemittel durch den Bediener von einer Position in Bezug auf den Roboterarm ebenfalls oftmals schwierig bzw. umständlich.

Darüber hinaus ist aus der US 6,212,443 B1 eine Einrichtung zur Programmierung einer Handhabungsvorrichtung bekannt, bei der ein Bediener einer Bedieneinheit beispielsweise mit einer Hand hält, während die andere Hand des Bedieners den Roboterarm auf seinem Soll-Bewegungsweg führt. Über die Bedienungseinheit können der Steuereinrichtung beispielsweise Sollpositionen des Roboterarms eingegeben werden. Eine Bedienung der Bedieneinheit insbesondere bei komplexen Eingaben, ohne die Hand vom Roboterarm nehmen zu müssen, erscheint jedoch sehr schwierig.

Eine weitere Einrichtung bzw. ein weiteres Verfahren sind aus der DE 10 2007 062 108 A1 bekannt. Bei der bekannten Einrichtung bzw. dem bekannten Verfahren ist es vorgesehen, dass am Ende eines Arms eines Industrieroboters ein von einem Bediener bewegbarer Griff angeordnet ist, wobei die Bewegung des Griffes in einer entsprechenden Bewegung des Arms des Industrieroboters resultiert. Ferner ist es vorgesehen, dass am Griff Eingabemittel, z.B. Tasten, angeordnet sind. Dadurch ist es möglich, zur Programmierung eines bestimmten Bewegungsweges des Roboterarms, der beispielsweise erforderlich ist, um Bauteile zusammenzufügen, den Bewegungsweg einzulernen, indem der Bediener den Roboterarm manuell führt und an bestimmten Positionen über die Eingabemittel z.B. einer Steuereinrichtung des Industrieroboters einen Haltepunkt vorgibt. Die Steuerung des Industrieroboters kann somit den von dem Bediener manuell durchgeführten Bewegungsweg des Roboterarms einlernen bzw. abspeichern. Ferner weist die bekannte Einrichtung einen Bildschirm auf, über den gemessene Kräfte angezeigt werden können.

Ferner ist es allgemein bekannt, einen derartigen Bildschirm bzw. Monitor beabstandet zum Roboterarm bzw. zur Bedieneinheit anzuordnen. Sollen nun verschiedene Betriebsarten oder Funktionen bei der Programmierung der Handhabungsvorrichtung abgerufen bzw. angewählt werden, so ist es erforderlich, dass der Bediener zumindest eine Hand, üblicherweise jedoch beide Hände von dem Arm des Industrieroboters entfernt, um über eine extern angebrachte Tastatur z.B. in einem Eingabemenü eine entsprechende neue Eingabe anzuwählen. Ein derartiges Vorgehen bedeutet einen erhöhten Zeitaufwand beim Einlernen z.B. von Bewegungsvorgängen und birgt darüber hinaus die Gefahr, dass die zuletzt erkannte Position des Arms des Industrieroboters durch das Freigeben des Arms durch den Bediener beeinflusst bzw. verfälscht wird.

### Offenbarung der Erfindung

Ausgehend von dem dargestellten Stand der Technik liegt der Erfindung die Aufgabe zugrunde, eine Einrichtung zur Programmierung einer Handhabungsvorrichtung, insbesondere eines Industrieroboters, nach dem Oberbegriff des Anspruchs 1 derart weiterzubilden, dass für eine Bediener eine besonders einfache bzw. komfortable Programmierung ermöglicht wird. Diese Aufgabe wird bei einer Einrichtung zur Programmierung einer Handhabungsvorrichtung mit den Merkmalen des Anspruchs 1 gelöst Der Erfindung liegt dabei die Idee zugrunde, die Eingabemittel an der Bedieneinheit mehrfach anzuordnen. Dadurch ist es möglich, dass der Bediener den Arm der Handhabungsvorrichtung von verschiedenen Seiten fasst und trotzdem jeweils einfach erreichbare bzw. bedienbare Eingabemittel vorfindet.

Der Erfindung liegt dabei weiterhin die Idee zugrunde, die am Arm der Handhabungsvorrichtung angeordnete Bedieneinheit bzw. deren Eingabemittel zur Erfassung zumindest von Positionen des Arms und zur Steuerung von in der Steuereinrichtung hinterlegten Anzeige- bzw. Eingabemenüs die gleichen Eingabemittel zu nutzen.

Vorteilhafte Weiterbildungen der erfindungsgemäßen Einrichtung sowie des erfindungsgemäßen Verfahrens zur Programmierung einer Handhabungsvorrichtung, insbesondere eines Industrieroboters, sind in den jeweiligen Unteransprüchen angegeben.

Insbesondere ist es dabei vorgesehen, dass die Eingabemittel zur Selektion von Eingabefeldern innerhalb einer Bildschirmmaske, zur Bestätigung oder zum Abbrechen von Dialogen, zur Bestätigung von Auswahloptionen, zur Bedienung einer Bildschirmtastatur, zum Auf-/Abwärtsscrollen von Auswahllisten oder Bildschirmmasken oder zur Durchführung von Dateioperationen dienen. Mit anderen Worten gesagt bedeutet dies, dass mittels der erfindungsgemäßen Einrichtung sämtliche üblicherweise erforderlichen Operationen mittels der Eingabemittel durchgeführt werden können, ohne dass der Bediener eine Hand von dem Arm der Handhabungsvorrichtung nehmen muss.

Um dem Bediener eine möglichst einfache Bedienung bzw. Erkennbarkeit der Monitoreinheit zu ermöglichen, wird darüber hinaus in einer bevorzugten Ausgestaltung der Erfindung vorgeschlagen, dass die Monitoreinheit am Arm bzw. der Bedieneinheit befestigt ist, oder dass die Monitoreinheit an einem Sockel der Handhabungsvorrichtung schwenkbar angeordnet ist. Dadurch wird es während der gesamten Bewegung des Roboterarms ermöglicht, dass der Bediener einen Blick auf die Monitoreinheit werfen kann.

Für den Fall, dass die Monitoreinheit am Sockel der Handhabungsvorrichtung angeordnet ist, ist es möglich, die Monitoreinheit mit einer Verstelleinrichtung auszustatten, die die Monitoreinheit der Stellung des Arms nachführt bzw. anpasst. Dadurch wird für den Bediener eine bessere Erkennbarkeit der Monitoreinheit bei unterschiedlichen Stellungen des Arms ermöglicht.

Die Erfindung umfasst auch eine Handhabungsvorrichtung, insbesondere einen Industrieroboter, mit einer erfindungsgemäßen Einrichtung zur Programmierung. Eine derartigeHandhabungsvorrichtung zeichnet sich durch eine besonders einfache Bedienung und ein besonders schnelles Erlernen neuer Bewegungsabläufe aus.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine vereinfachte, schematisierte Draufsicht auf eine Handhabungsvorrichtung in Form eines Industrieroboters und
- Fig. 2 und Fig. 3: perspektivische Ansichten auf das Ende eines Roboterarms, wie er bei einer Handhabungsvorrichtung gemäß Fig. 1 verwendet wird, mit einer Bedieneinheit zur Programmierung der Handhabungsvorrichtung aus unterschiedlichen Perspektiven.

Gleiche Bauteile bzw. Bauteile mit gleicher Funktion sind in den Figuren mit denselben Bezugsziffern versehen.

In den Figuren ist eine Handhabungsvorrichtung 10 in Form eines Industrieroboters 100 dargestellt. Mittels der Handhabungsvorrichtung 10 lassen sich insbesondere automatisiert Bauteile in einem Fertigungsprozess handhaben, beispielsweise Bauteile zueinander positionieren, zusammenfügen oder ähnliches.

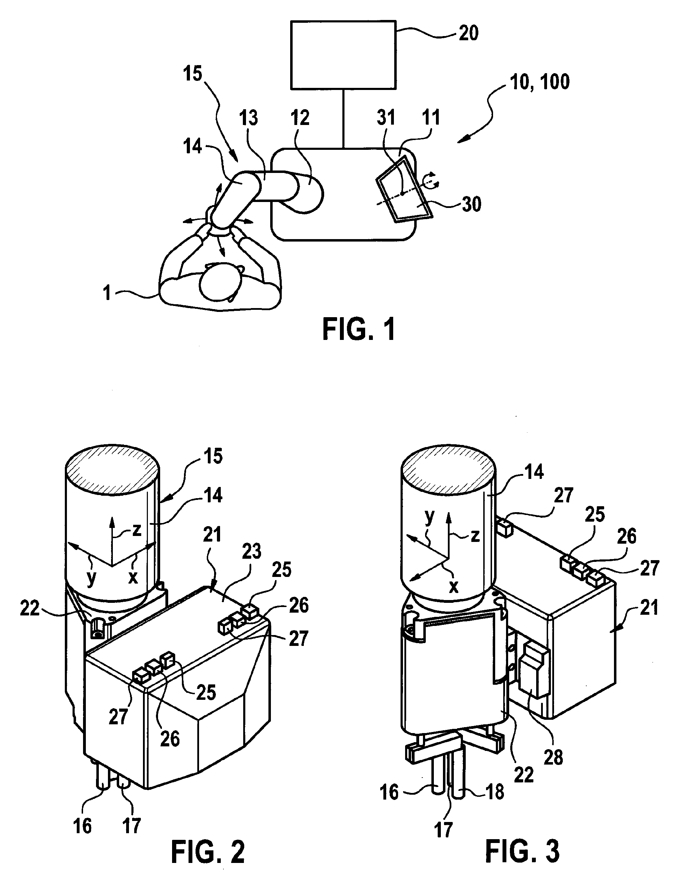

Die Handhabungsvorrichtung 10 weist einen Gerätesockel 11 auf, von dem ein im Ausführungsbeispiel drei Roboterarmglieder 12 bis 14 aufweisender Roboterarm 15 angeordnet ist. Das dem Gehäusesockel 11 gegenüberliegende Ende des Roboterarms 15 weist beispielhaft drei, in den Fig. 2 und 3 erkennbare Greiffinger 16 bis 18 auf, die zum Halten bzw. Greifen von nicht dargestellten Gegenständen dienen. Die zueinander in üblicher Art und Weise schwenkbar angeordneten Roboterarmglieder 12 bis 14 sind derart angeordnet, dass insbesondere mittels der Greiffinger 16 bis 18 jeder im Aktionsradius der Handhabungsvorrichtung 10 angeordnete Punkt im Raum angefahren werden kann.

Das Anfahren bzw. die Ansteuerung des Roboterarms 15 sowie weitere Funktionen der Handhabungsvorrichtung 10 erfolgen mittels einer Steuereinrichtung 20, die in der Fig. 1 lediglich schematisch dargestellt ist.

Zum Programmieren bzw. Einlernen neuer Handhabungsvorgänge, z.B. dem Einlernen eines Bewegungsweges des Roboterarms 15, der erforderlich ist, um einen Gegenstand beispielsweise von einer ersten im Raum befindlichen Position aufzunehmen und an einem zweiten, an einer anderen Position des Raum befindlichen Ort abzustellen, ist es erforderlich, dem Roboterarm 15 einen derartigen Bewegungsweg vorzugeben. Hierzu weist die Steuereinrichtung 20 einen Programmiermodus auf. Dieser Programmiermodus sieht vor, dass der Roboterarm 15 von einem Bediener 1 in den in der Fig. 2 und 3 dargestellten drei Raumachsen x, y und z manuell bewegt werden kann, wobei entweder der komplette Bewegungsweg, oder aber zumindest mehrere Positionen auf dem Bewegungsweg des Roboterarms 15 von der Steuereinrichtung 20 erfasst bzw. abgespeichert werden können. Dieses Erfassen bzw. Abspeichern von Positionen findet insbesondere durch den Bediener 1 statt, der hierzu eine am Roboterarm 15, insbesondere am Roboterarmglied 14 angeordnete Bedieneinheit 21 betätigt.

Wie insbesondere anhand der Fig. 2 und 3 erkennbar ist, ist die Bedieneinheit 21 am Ende des Roboterarms 15 knapp oberhalb der Greiffinger 16 bis 18 an einer Trägereinrichtung 22 austauschbar befestigt. Hierzu weist die Trägereinrichtung 22 eine im Einzelnen nicht näher dargestellte Schnittstelle auf, die eine mechanische sowie elektrische Kopplung der Bedieneinheit 21 mit dem Roboterarm 15 und auch mit der Steuereinrichtung 20 ermöglicht. Vorzugsweise ist es vorgesehen, dass die Bedieneinheit 21 lediglich zum Programmieren der Handhabungsvorrichtung 10 mit dem Roboterarm 15 verbunden ist.

Wie man insbesondere auch anhand der Fig. 1 erkennt, ist die Bedieneinheit 21 von dem Bediener 1 mittels seiner beiden Hände manuell greifbar, wobei die Anordnung der Bedieneinheit 21 derart ist, dass der Bediener 1 die Bedieneinheit 21 zusammen mit dem Roboterarm 15 derart bewegen kann, dass sich der gewünschte bzw. einzulemende Bewegungsweg einstellt.

Anhand der beiden Fig. 2 und 3 ist ferner erkennbar, dass an der Oberseite 23 der Bedieneinheit 21 zwei Gruppen mit jeweils drei identisch ausgebildeten Bedientasten 25 bis 27 für jeweils dieselben Funktionen angeordnet sind. Die doppelte bzw. redundante Anordnung der Bedientasten 25 bis 27 ermöglicht es dem Bediener 1, den Roboterarm 15 aus verschiedenen Positionen bzw. Stellungen zu greifen, wobei unabhängig von der Stellung bzw. Position des Bedieners 1 jeweils eine Gruppe von als Eingabemittel dienenden Bedientasten 25 bis 27 vom Bediener 1 betätigbar ist, ohne dass dieser hierzu eine Hand von der Bedieneinheit 21 nehmen muss bzw. diese Hand anders positionieren muss. Vorzugsweise sind die Bedientasten 25 bis 27 nahe dem Roboterarm 15 angeordnet.

Ferner erkennt man noch auf der dem Trägerelement 22 zugewandten Seite der Bedieneinheit 21 seitlich eine weitere Bedientaste 28, die vorzugsweise ebenfalls redundant (in den Figuren nicht erkennbar) vorgesehen ist. Mittels der weiteren Bedientaste 28 ist es beispielsweise möglich, den Roboterarm 15 kraftfrei zu stellen, so dass dieser von dem Bediener 1 mit relativ geringem Kraftaufwand an die gewünschte Raumposition positionierbar ist.

Die soweit angesprochenen bzw. beschriebenen Bedientasten 25 bis 28 erfüllen erfindungsgemäß eine Doppelfunktion: Zum Einen dienen sie dazu, der Steuereinrichtung 20 der Handhabungsvorrichtung 10 durch Betätigen bestimmte Raumpositionen mitzuteilen bzw. diese an die Steuereinrichtung 20 zu übermitteln, oder aber das angesprochene Bewegen des Roboterarms 15 zu ermöglichen. Zum Anderen dienen die Bedientasten 25 bis 28 zumindest teilweise dazu, verschiedene zusätzliche Funktionen der Steuereinrichtung 20 anzusteuern, auszuwählen bzw. zu betätigen.

Vorzugsweise ist es vorgesehen, dass die angesprochenen Funktionen bildschirmgesteuert betätigbar sind. Hierzu ist beispielhaft auf dem Gehäusesockel 11 eine Monitoreinheit 30 in einer vertikal angeordneten Drehachse 31 schwenkbar angeordnet. Die Schwenkbarkeit der Monitoreinrichtung 30 ermöglicht es, dass der Bediener 1 von jeder Position beim Bewegen des Roboterarms 15 einen freien Blick auf die Monitoreinheit 30 werfen kann. Hierzu kann es gegebenenfalls auch vorgesehen sein, dass die Monitoreinrichtung 30 mit einer Verstelleinrichtung (nicht dargestellt) gekoppelt ist, die in Abhängigkeit der Stellung des Roboterarms 15 eine entsprechende Drehung der Monitoreinheit 30 in der Drehachse 31 bewirkt, derart, dass der Bediener 1 stets Blickkontakt mit der Monitoreinheit 30 halten kann.

Alternativ ist es auch denkbar bzw. möglich, dass die Monitoreinheit 30 entweder an dem Roboterarm 15 selbst, oder aber an der Bedieneinheit 21 angeordnet sein kann.

Mittels der Bedientasten 25 bis 28 ist es möglich, diese als Eingabemittel zur Selektion von Eingabefeldern innerhalb einer Bildschirmmaske, zur Bestätigung oder zum Abbrechen von Dialogen, zur Bestätigung von Auswahloptionen, zur Bedienung einer Bildschirmtastatur, zum Auf-/Abwärtsscrollen von Auswahllisten oder Bildschirmmasken, zur Durchführung von Dateioperationen (Laden oder Speichern von Daten) oder ähnlichem zu benutzen, die auf der Monitoreinheit 30 angezeigt werden. Es ist somit erfindungsgemäß nicht erforderlich, dass der Bediener 1 zum Abrufen bzw. Bestätigen der einzelnen Menüfunktionen eines Programms der Steuereinrichtung 20 eine Hand von der Bedieneinheit 21 nimmt.

Die soweit beschriebene Handhabungsvorrichtung 10 bzw. deren Bedieneinheit 21 können in vielfältiger Art und Weise abgewandelt bzw. modifiziert werden, ohne vom Erfindungsgedanken abzuweichen. Dieser besteht darin, dass die Bedieneinheit 21 bzw. deren Bedientasten 25 bis 28 eine Mehrfachfunktion erfüllen, insbesondere auch dazu dienen, einen menügeführten Ein-/Ausgabedialog über eine Monitoreinheit 30 mit der Steuereinrichtung 20 zu führen.

## Patentansprüche

1. Einrichtung zur Programmierung einer Handhabungsvorrichtung (10), insbesondere eines Industrieroboters (100), mit einer an einem Arm (15) der Handhabungseinrichtung (10) angeordneten Bedieneinheit (21), die von einem Bediener (1) zur Programmierung von Bewegungsabläufen zusammen mit dem Arm (15) an unterschiedliche Positionen, insbesondere Bearbeitungspositionen, bewegbar ist, mit Eingabemitteln (25 bis 28) an der Bedieneinheit (21) zur Erfassung zumindest von Positionen des Arms (15), vorzugsweise in Form von Eingabetasten, wobei die Bedieneinheit (21) mit einer Steuereinrichtung (20) für die Handhabungseinrichtung (10) gekoppelt ist, wobei über die Eingabemittel (25 bis 28) der Bedieneinheit (21) an die Steuereinrichtung (20) übertragene Daten über eine Monitoreinheit (30) dem Bediener (1) anzeigbar sind, wobei die Eingabemittel (25 bis 28) zusätzlich zur Steuerung bzw. Bedienung von in der Steuereinrichtung (20) hinterlegten Anzeige- bzw. Eingabemenüs dienen, wobei die Anzeige- bzw. Eingabemenüs auf der Monitoreinheit (30) anzeigbar sind, und wobei die Eingabemittel (25 bis 28) zur Erfassung zumindest von Positionen des Arms (15) und zur Steuerung von in der Steuereinrichtung (20) hinterlegten Anzeige- bzw. Eingabemenüs die gleichen Eingabemittel (25 bis 28) sind, **dadurch gekennzeichnet, dass** die Eingabemittel (25 bis 28) an der Bedieneinheit (21) mehrfach angeordnet sind.

2. Einrichtung nach Anspruch 1, **dadurch gekennzeichnet, dass** die Bedieneinheit (21) am Ende des Arms (15) oberhalb von Greiffingern (16 bis 18) angeordnet ist.

3. Einrichtung nach Anspruch 1 oder 2, **dadurch gekennzeichnet, dass** die Bedieneinheit (21) über eine Schnittstelle mechanisch und elektrisch austauschbar mit dem Roboterarm (15) verbunden ist.

4. Einrichtung nach Anspruch 1, **dadurch gekennzeichnet, dass** die Eingabemittel (25 bis 28) zur Selektion von Eingabefeldern innerhalb einer Bildschirmmaske, zur Bestätigung oder zum Abbrechen von Dialogen, zur Bestätigung von Auswahloptionen, zur Bedienung einer Bildschirmtastatur, zum Auf-/Abwärtsscrollen von Auswahllisten oder Bildschirmmasken oder zur Durchführung von Dateioperationen dienen.

5. Einrichtung nach einem der Ansprüche 1 bis 4, **dadurch gekennzeichnet, dass** die Monitoreinheit (30) am Arm (15) bzw. an der Bedieneinheit (21) befestigt ist, oder dass die Monitoreinheit (30) an einem Sockel (11) der Handhabungsvorrichtung (10) schwenkbar angeordnet ist.

6. Einrichtung nach Anspruch 5, **dadurch gekennzeichnet, dass** die Monitoreinheit (30) im Falle einer Anordnung am Sockel (11) der Handhabungsvorrichtung (10) mit einer Verstelleinrichtung ausgestattet ist, die die Monitoreinheit (30) der Stellung des Arms (15) nachführt bzw. anpasst.

7. Handhabungsvorrichtung (10), insbesondere Industrieroboter (100), mit einer Einrichtung zur Programmierung nach einem der Ansprüche 1 bis 6.

## Claims

1. Device for programming a handling apparatus (10), particularly an industrial robot (100), having an operator control unit (21) that is arranged on an arm (15) of the handling apparatus (10) and that can be moved together with the arm (15) to different positions, particularly machining positions, by an operator (1) for the purpose of programming motion sequences, having input means (25 to 28) on the operator control unit (21) for capturing at least positions of the arm (15), preferably in the form of input keys, wherein the operator control unit (21) is coupled to a control device (20) of the handling apparatus (10), wherein the input means (25 to 28) of the operator control unit (21) can be used to display data transmitted to the control device (20) to the operator (1) by means of a monitor unit (30), wherein the input means (25 to 28) are additionally used for the control or operator control of display and input menus stored in the control device (20), wherein the display and input menus can be displayed on the monitor unit (30), and wherein the input means (25 to 28) for capturing at least positions of the arm (15) and for controlling display and input menus stored in the control device (20) are the same input means (25 to 28), **characterized in that** the input means (25 to 28) are arranged on the operator control unit (21) in multiples.

2. Device according to Claim 1, **characterized in that** the operator control unit (21) is arranged at the end of the arm (15) above gripping fingers (16 to 18)

3. Device according to Claim 1 or 2, **characterized in that** the operator control unit (21) is connected to the robot arm (15) via an interface so as to be mechanically and electrically interchangeable.

4. Device according to Claim 1, **characterized in that** input means (25 to 28) are used for selecting input boxes within a screen mask, for confirming or terminating dialogues, for confirming selection options, for operating a screen keyboard, for scrolling up/down through selection lists or screen masks or for performing file operations.

5. Device according to one of Claims 1 to 4, **characterized in that** the monitor unit (30) is mounted on the arm (15) or on the operator control unit (21), or **in that** the monitor unit (30) is arranged on a base (11) of the handling apparatus (10) so as to be swivelable.

6. Device according to Claim 5, **characterized in that** when arranged on the base (11) of the handling apparatus (10), the monitor unit (30) is equipped with an adjusting device that tracks or matches the monitor unit (30) to the position of the arm (15).

7. Handling apparatus (10), particularly an industrial robot (100), having a device for programming according to one of Claims 1 to 6.

## Revendications

1. Dispositif de programmation d'un dispositif de manipulation (10), notamment d'un robot industriel (100), avec une unité de commande (21) disposée au niveau d'un bras (15) du dispositif de manipulation (10) et pouvant être déplacée par un utilisateur (1) pour programmer des délais de réalisation de mouvement conjointement avec le bras (15) en différentes positions, notamment des positions de traitement, avec des moyens de saisie (25 à 28) prévus au niveau de l'unité de commande (21) pour détecter au moins les positions du bras (15), de préférence sous la forme de touches de saisie, l'unité de commande (21) étant couplée à un dispositif de commande (20) prévu pour le dispositif de manipulation (10), les données transmises au dispositif de commande (20) via les moyens de saisie (25 à 28) de l'unité de commande (21) pouvant être affichés à l'utilisateur (1) via une unité de surveillance (30), les moyens de saisie (25 à 28) servant en outre à commander et/ou utiliser les menus d'affichage et/ou de saisie mémorisés dans le dispositif de commande (20), les menus d'affichage et/ou de saisie pouvant être affichés sur l'unité de surveillance (30) et les moyens de saisie (25 à 28) afin de détecter au moins les positions du bras (15) et de commander les menus d'affichage et/ou de saisie mémorisés dans le dispositif de commande (20) qui sont les mêmes moyens de saisie (25 à 28), **caractérisé en ce que** les moyens de saisie (25 à 28) sont disposés de façon multiple au niveau de l'unité de commande (21).

2. Dispositif selon la revendication 1, **caractérisé en ce que** l'unité de commande (21) est disposée à l'extrémité du bras (15), au-dessus des doigts de préhension (16 à 18).

3. Dispositif selon la revendication 1 ou 2, **caractérisé en ce que** l'unité de commande (21) est reliée au bras de robot (15) de façon à pouvoir être remplacée sur le plan mécanique et électrique via une interface.

4. Dispositif selon la revendication 1, **caractérisé en ce que** les moyens de saisie (25 à 28) servent à sélectionner des champs de saisie à l'intérieur d'un masque d'écran, à confirmer ou interrompre des dialogues, à confirmer des options de sélection, à utiliser un écran tactile, à faire défiler vers le haut et vers le bas des listes de sélection ou des masques d'écran ou à exécuter des opérations de fichier.

5. Dispositif selon l'une quelconque des revendications 1 à 4, **caractérisé en ce que** l'unité de surveillance (30) est fixée au bras (15) et/ou à l'unité de commande (21) ou que l'unité de surveillance (30) est disposée de façon à pouvoir pivoter au niveau d'un socle (11) du dispositif de manipulation (10).

6. Dispositif selon la revendication 5, **caractérisé en ce que** l'unité de surveillance (30) est équipée, en cas d'agencement sur le socle (11) du dispositif de manipulation (10), d'un dispositif de réglage que l'unité de surveillance (30) suit pour connaître la position du bras (15) et/ou à laquelle elle s'adapte.

7. Dispositif de manipulation (10), notamment robot industriel (100), doté d'un dispositif de programmation selon l'une quelconque des revendications 1 à 6.
